# EUROPEAN PATENT APPLICATION

(11) **EP 2 385 244 A1**
(43) Date of publication of application: **09.11.2011**
(21) Application number: 10161733.0
(22) Date of filing: 03.05.2010
(51) Int. Cl.: F03B 17/00, F03B 13/06, F03B 9/00

(54) **Electricity generating device with potential energy of water or fluid**

(71) Applicant: Ho Fu, Hung, Dali City Taichung Hsien 41267 (TW); Kao Ming, Jung, Dali City Taichung Hsien 41267 (TW)
(72) Inventor: Ho, Fu Hung, 41267, Dali City, Taichung Hsien (TW)
(74) Representative: Beck, Michael Rudolf

(57) **Abstract**

An electric generating device includes a higher gear (40) and a lower gear (41) rotatably mounted between a higher water tower (20) and a lower reservoir (11), a chain (42) engaged with the gears (40, 41) and having a number of plates (43), the water tower (20) includes an outlet tube (21) directed to the plates (43) for supplying the water to move the plates (43) and to rotate the chain (42) and the gears (40, 41), an electric generator (50, 51) is coupled to the higher gear (40) for generating an electric energy, and one or more ram water pumps (25) are used for pumping the water from the reservoir (11) upwardly into the water tower (20) without electric energy, the higher gear (40) is adjustable to different rotational speeds with an adjustable magnetic device (54).

## Description

The invention relates to an electric generating device for generating electric energy with the potential energy of the water supported on a high position.

Typical hydraulic electric generating devices may employ the hydraulic energy to generate the electric energy, but are not available for normal house buildings.

The invention aims at providing an electric generating device for generating electric energy with the potential energy of the water supported on a high position and available for house buildings.

This technical problem is solved by an electric generating device according to the claims.
- FIG. 1: is a front view of an electric generating device;
- FIGS. 2, 3: are enlarged partial front views of the device;
- FIG. 4: is a partial side view of the device; and
- FIG. 5: is an enlarged partial side view of the device.

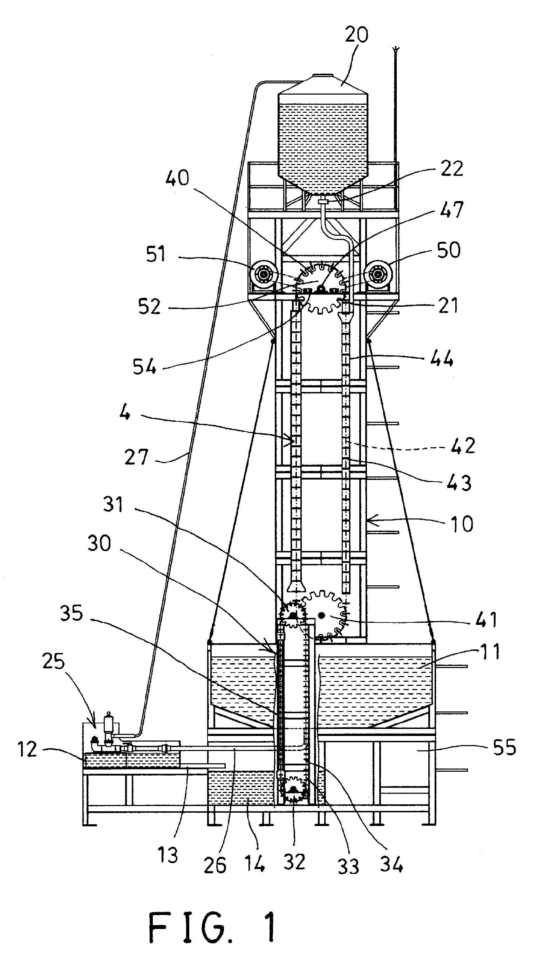

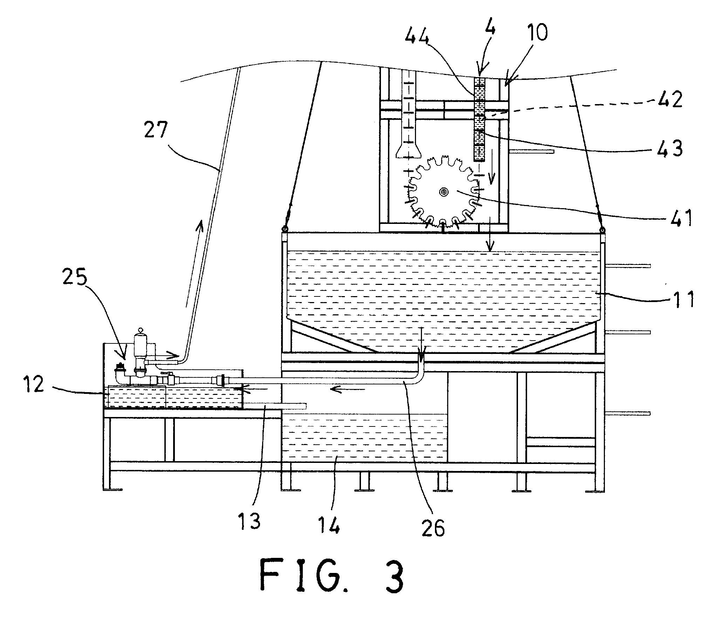

Referring to FIGS. 1-4, an electric generating device comprises a support 10 including a water reservoir 11 disposed on the middle or lower position of the support 10 for receiving water or fluid, and including a water receptacle 12 disposed below the reservoir 11 for receiving the water and having a discharge port 13 for discharging the water downwardly into a water container 14 which is disposed below the receptacle 12. A water tower 20 is disposed on the support 10 and above the reservoir 11, and includes an outlet tube 21, and an electric control valve 22 coupled to the outlet tube 21 for controlling the water, one or more (such as two) (ram) water pumps 25 are disposed for pumping the water up to the water tower 20 without the electric energy, and include an inlet pipe 26 coupled to the reservoir 11 (FIG. 3) for receiving the water, and an outlet pipe 27 coupled to the water tower 20 for supplying the water to the water tower 20.

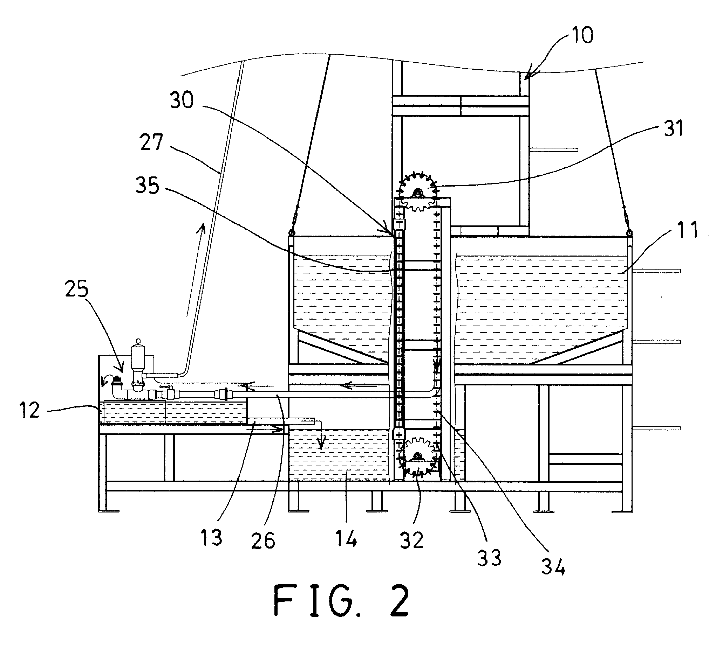

A water may flow out of the ram water pumps 25 while in use and may flow into the receptacle 12, and then into the container 14. One or more (such as two, FIG. 2) water elevating devices 30 may be disposed between the reservoir 11 and the container 14 for elevating the water up into the reservoir 11. The water elevating devices 30 each include a higher pinion 31 and a lower pinion 32 (FIGS. 1-2, 4), a chain 33 engaged with the pinions 31, 32 and having a number of water scoops 34 mounted along the chain 33, and/or an elevating tube 35 disposed between the reservoir 11 and the container 14 for receiving a portion of the chain 33 and the scoops 34 and for elevating the water from the container 14 into the reservoir 11; or the water may be directly elevated into the reservoir 11 with the scoops 34 only, and without the elevating tube 35.

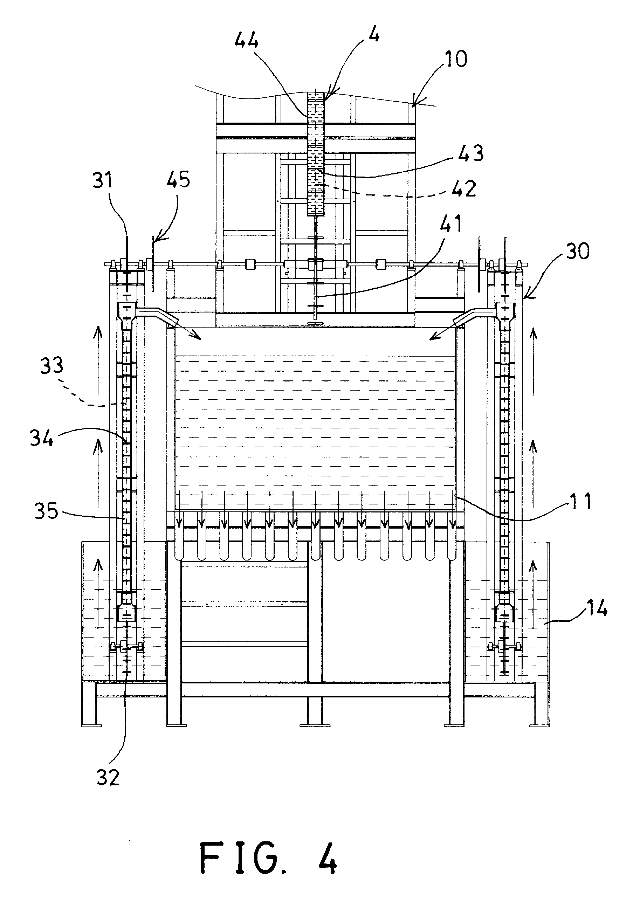

A hydraulic energy converting device 4 includes a higher gear 40 mounted below the water tower 20, and a lower gear 41 mounted above the reservoir 11 or between the pinions 31 (FIG. 4) of the two water elevating devices 30, and a chain 42 engaged with the gears 40, 41 and having a number of plates 43 mounted along the chain 42, and/or a guiding tube 44 disposed between the water tower 20 and the reservoir 11 for receiving a portion of the chain 42 and the plates 43 and for preventing the chain 42 and the plates 43 from vibrating.

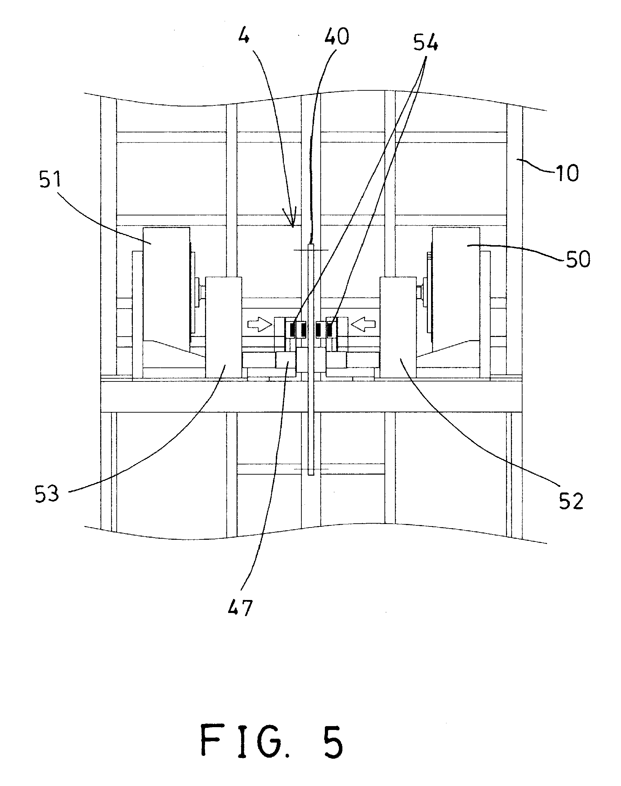

In operation, the water from the outlet tube 21 of the water tower 20 (FIG. 1) is directed to the guiding tube 44 and may move the plates 43 and rotate the chain 42, and may drive the gears 40, 41, the lower gear 41 may be directly engaged with the higher pinion 31, or may be coupled to the higher pinion 31 with a coupling device 45 (FIG. 4) in order to rotate the pinions 31, 32 and the chain 33 and to elevate the water from the container 14 into the reservoir 11 with the scoops 34. The higher gear 40 is disposed on a spindle 47 (FIGS. 1, 5), and one or more (such as two) electric generators 50, 51 coupled to the spindle 47 directly or with reduction gearings, or change gear boxes 52, 53, or directly coupled to the higher gear 40 for being driven by the higher gear 40 and the chain 42. One or more (such as two, FIG. 5) magnetic devices 54 are disposed between the higher gear 40 and the electric generators 50, 51 or the change gear boxes 52, 53 and movable relative to the spindle 47 for adjusting the distance between the higher gear 40 and the magnetic devices 54 and the rotational speed of the higher gear 40.

For example, the rotational speed of the higher gear 40 is greater when the magnetic devices 54 are disposed farther away from the higher gear 40, at this moment, the change gear boxes 52, 53 or the electric generators 50, 51 may be rotated by the higher gear 40 with a greater rotational speed. On the contrary, when the magnetic devices 54 are disposed closer to the higher gear 40, the magnetic devices 54 may apply a greater retarding force and the rotational speed of the higher gear 40 will be reduced, and the change gear boxes 52, 53 or the electric generators 50, 51 may be driven by the higher gear 40 with a decreased rotational speed but with a greater driving torque.

As shown in FIG. 1, a control device 55 may further be coupled to the electric generators 50, 51 and/or the change gear boxes 52, 53 for controlling the electric energy generated by the electric generators 50, 51, and for supplying the electric energy to energize the other electric facilities or appliances. The water pumps 25 may pump the water to the water tower 20 without the electric energy, and the gears 40, 41 and the chain 42 and the plates 43 may be actuated with the water at a higher position. The ram water pumps 25 may also be directly mounted in the reservoir 11 for pumping the water from the reservoir 11 to the water tower 20 without the electric energy and without the receptacle 12 and the container 14 and the water elevating devices 30.

## Claims

1. An electric generating device comprising a support (10) including a reservoir (11) for receiving water, a water tower (20) disposed on the support (10) and located above the reservoir (11), and an outlet tube (21), **characterized in that** a hydraulic energy converting device (4) includes a higher gear (40) mounted below the water tower (20), a lower gear (41) mounted above the reservoir (11), a chain (42) engaged with the higher and the lower gears (40, 41) and having a plurality of plates (43) attached to the chain (42), the outlet tube (21) is directed to the plates (43), an electric generator (50, 51) is coupled to the higher gear (40) and driven by the higher gear (40) and the chain (42), and at least one ram water pump (25) pumps the water from the reservoir (11) into the water tower (20).

2. The electric generating device as claimed in claim 1, wherein a change gear box (52, 53) is coupled to the higher gear (40) and the electric generator (50, 51).

3. The electric generating device as claimed in claim 1 or 2, wherein a magnetic device (54) is mounted between the higher gear (40) and the change gear box (52, 53).

4. The electric generating device as claimed in one of claims 1 to 3, wherein the support (10) includes a receptacle (12) disposed below the reservoir (11) and having a discharge port (13) for discharging the water down to a lower container (14).

5. The electric generating device as claimed in claim 4, wherein the receptacle (12) receives a water from the ram water pump (25).

6. The electric generating device as claimed in claim 4 or 5, wherein at least one water elevating device (30) is disposed between the reservoir (11) and the container (14).

7. The electric generating device as claimed in claim 6, wherein the water elevating device (30) includes a higher pinion (31), a lower pinion (32), a chain (33) engaged with the higher and the lower pinions (31, 32) and having a plurality of scoops (34) mounted along the chain (33).

8. The electric generating device as claimed in claim 6 or 7, wherein the water elevating device (30) includes an elevating tube (35) disposed between the reservoir (11) and the container (14).

9. The electric generating device as claimed in claim 7 or 8, wherein the higher pinion (31) is coupled to the lower gear (41).
